# EUROPEAN PATENT APPLICATION

(11) **EP 1 237 122 A2**
(43) Date of publication of application: **04.09.2002**
(21) Application number: 02002991.4
(22) Date of filing: 11.02.2002
(51) Int. Cl.: G06T 3/40

(54) **Method and apparatus for image processing**

(30) Priority: 01.03.2001 JP 2001056779
(71) Applicant: Fuji Photo Film Co., Ltd., Kanagawa-ken (JP)
(72) Inventor: Tsue, Takashi, Ashigarakami-gun, Kanagawa-ken (JP); Mochizuki, Naoki, Ashigarakami-gun, Kanagawa-ken (JP)
(74) Representative: Klunker . Schmitt-Nilson . Hirsch

(57) **Abstract**

A method and apparatus whereby a processed image of high image quality is obtained at a high speed when image data is subjected to an image process, is provided. Image data read out from a media is subjected to an image input process in a computer and stored temporarily in a buffer. Then, in accordance with the characteristics of the image process to be performed, a several line portion of the image data stored in the buffer is read out and subjected to a magnification process in the X direction; the processed image data is stored temporarily in another buffer, and further subjected to a magnification process in the Y direction. The processed image data is subjected to an image output process according to the characteristics of the printer driver, and after being stored in another buffer, is outputted by a printer.

## Description

### BACKGROUND OF THE INVENTION

### Field of the Invention

The present invention relates to an image processing method and apparatus for subjecting image data to a magnification process, a color conversion process, a sharpness enhancement process, a gradation process, or the like to obtain processed image data, and a computer readable storage medium for recording a program causing a computer to execute the image processing method.

### Description of the Related Art

There are known image reproduction systems for reproducing, by use of an image outputting device such as a printer or a monitor, image data obtained by photographing using a digital camera or the like, or image data obtained by reading out, by use of a scanner, the image recorded on a photographic film. In order to improve the image quality of the images to be reproduced by these systems, the image data is subjected to a variety of image processes, such as a magnification process, a color conversion process, a sharpness enhancement process, a gradation process, a rotation process, or the like.

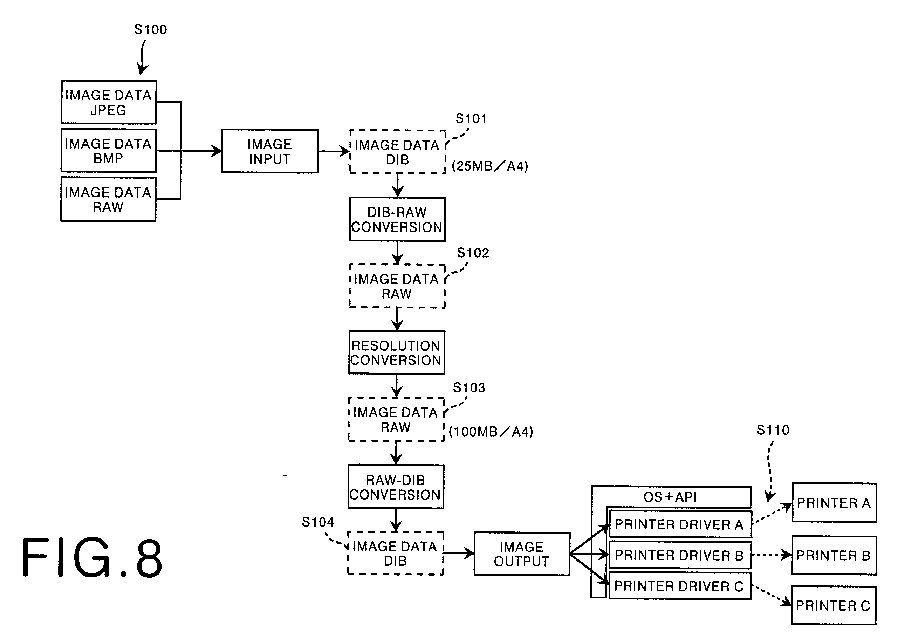

Fig. 8 is a block drawing of a conventional image processing system. Note that the image processing system shown in Fig. 8 is a system for subjecting the image represented by an image data S100 to a resolution conversion process that converts the resolution thereof from 300 dpi to 600 dpi, and printing out resolution conversion processed image data S110. Further, the image processing is performed by a personal computer (hereinafter referred to as a PC).

Because the image data S100 to be subjected to image processing can be image data that has been obtained from any of a number of types of input apparatuses, the image data S100 can be in any of a number of file formats: JPEG; bitmap format; DIB format, which is the standard format handled by Windows type operating systems; or the RAW format, which is a standard file format for performing image processing; etc. Here, the DIB format is a format wherein the image data is read out from a starting point in the lower left corner, and the RAW format is a format wherein the image data is read out from a starting point in the upper left corner. When an image process is to be performed, image data S100 of a variety of file formats such as those described above is inputted to the PC. Note that here, the image data S100 is image data capable of being reproduced as an A4 size image having a resolution of 300 dpi, and the data capacity is 25 MB. First, in the input process, the input of the image data S100 is received, and the inputted image data S100 is subjected to an image input process wherein said image data S100 is converted to image data S101 in the DIB format. Note that if the image data to be inputted is already data in the DIB format, this conversion is not necessary. The DIB formatted image data S101 is thereby developed in the memory. Note that the image data developed in the memory is indicated by the broken line in Fig. 8.

Continuing, a DIB-RAW conversion process for converting the image data S101, which is in the DIB format, to an image data S102 in the RAW format, which is the standard file format employed in image processing, is performed to obtain the image data S102. Then, a resolution conversion process is performed on this image data S102 to obtain a processed image data S103. Note that the image data S103 contains 100 MB, which is four times that of the image data S100. Then, a RAW-DIB conversion process for converting the image data S103, which is in the RAW format, to the DIB format, which is the format handled by the image output process, is performed to obtain the image data S104.

Next, an image output process for converting the image data S104 to a file format appropriate for input to a printer is performed. Here, because a variety of printers are employed (printers A-C shown in Fig. 8), the image output process is performed by the standard API (Application Program Interface) of the OS and the drivers of the printers A-C, respectively, according to the characteristics of the printer A-C.

Note that although there are cases in which the resolution conversion process is performed in the printer, that is, is not performed by the PC, in these cases also, the DIB-RAW conversion process, the magnification process, and the RAW-DIB conversion process are performed in the printer to obtain processed image data S110.

Because the performance of image processes such as the resolution conversion process described above requires an extraordinarily large number of calculations in order to ensure high image quality, a substantial amount of time is required to perform said calculations. In particular, because the memory capacity of a standard PC for general use is limited, an extraordinarily long period of time is required to perform the calculations to obtain a high image quality image.

Further, for cases in which processing is performed utilizing the driver of a printer or other such output device, although a different driver is utilized for each output device, because the image quality changes according to each respective driver, there is a problem in that it has been difficult to obtain processed images that have a uniform image quality regardless of the output device. Also, regarding the large quantity of image data required to reproduce a high image quality image, because it is not possible to output said image data all at once to an output device, it is necessary that said image data be divided into small blocks of image data and outputted. However, because a large number of temporary files must be formed on the hard disk of the PC in order to separate the image data, the PC suffers a substantial decrease in performance, and the amount of processing time required becomes longer.

Still further, because the image data that is to be subjected to image processes is provided in any of a number of various formats, depending on the device in which said image data has been formed, the inputted image data must first be converted to the RAW format, which is the standard format for data to be subjected to image processing, in order to be subjected to the image processes. However, in order to perform this type of conversion, the image data must be stored temporarily in a memory, and if the image data is of a large volume, a large amount of memory is consumed and the processing time becomes longer. In particular, there is a problem in that due to the fact that the standard PC for the general user does not have a large amount of memory, the performance speed is further reduced when the large number of temporary files are formed on the hard disk during the performance of image processes.

On the other hand, although it is possible to increase the processing speed by performing image processes based on simple calculations, in comparison to cases in which image processing is performed based on higher order calculations, there is a problem in that the image quality of the processed images obtained thereby is inferior.

### SUMMARY OF THE INVENTION

The present invention has been developed in view of the circumstances described above, and it is a primary object of the present invention to provide an image processing method and apparatus capable of processing various types of image data at a high speed and obtaining processed images having high image quality, and a computer readable storage medium for recording a program causing a computer to execute the image processing method.

The method of processing images according to the present invention is a method of subjecting inputted image data to image processes and outputting the processed image data, and comprises the steps of: sequentially dividing the inputted image data into small blocks of image data having a data volume according to the characteristics of an image process to be performed; sequentially performing the image process on said small blocks of image data to sequentially obtain small blocks of processed image data; and sequentially outputting said small blocks of processed image data to an output destination.

The referent of "inputted image data" includes: image data stored on a memory card, a floppy disk, a CD-ROM, or other storage medium; image data inputted directly from a scanner, a digital camera, or other input device; image data inputted from an external apparatus connected to the network in which the image processing system according to the present invention has been implemented, etc., in short, image data inputted from almost any input source can be employed. Note that for cases in which image data inputted from an input device or an external apparatus or the like is to be subjected to image processes, the image data can be inputted directly therefrom, or the driver of the input device or external apparatus can be controlled and the image data inputted thereby.

The referent of "small blocks of image data having a data volume according to the characteristics of an image process to be performed" is the quantity of image data required to perform an image process on one pixel of the image represented by the inputted image data. In a case, for example, in which the image process to be performed is a resolution conversion process and a four line portion of the inputted image data is required to obtain the pixel value of one resolution converted pixel, the "data volume according to the characteristics of an image process to be performed" is a four line portion of the inputted image data. Note that the quantity of a small block of image data differs depending on the processing capacity of the apparatus (i.e., a PC) in which the system according to the present invention is implemented. Further, according to the present invention, a plurality of types of image processes can be performed; in which case, the plurality of image processes can be carried out in a continuous, pipeline form.

The phrase "sequentially dividing" refers to the division of the image represented by the inputted image data into a plurality of small regions to obtain as a small block of image data the image data representing each of the small regions so that the entirety of the inputted image data can be processed.

The phrase "performing the image process on said small blocks of image data sequentially" refers to subjecting the small blocks of image data obtained by sequentially dividing the inputted image data to image processes in the sequence in which said division has been performed.

As to the output destination of the processed small blocks of image data, a memory card, a floppy disk, a CD-ROM, or other storage medium, a printer, a monitor, an external apparatus connected via a network, etc. can be applied.

Note that according to the image processing method of the present invention, it is preferable that the inputted image data be divided into the aforementioned small blocks of data in accordance with the access characteristics of the inputted image data, also.

Here, the data unit (that is, as to whether the image data has been formed in a line position format, a block position format), whether the image data is compressed/non-compressed, the readout starting point (such as the lower left corner for data in the DIB format, the upper right corner for data in the RAW format) of the inputted image data differs according to the file format. The phrase "access characteristics" refers to the data unit, whether the data has been compressed or not, the data readout starting point, etc., corresponding to the file format.

The expression "divided into the aforementioned small blocks of data in accordance with the access characteristics of the inputted image data" refers to the division of the inputted image data into small blocks of image data according to the access characteristics of the image data and the characteristics of the image process to be performed. In a case, for example, in which the readout starting point of the inputted image data is the upper left corner, the small blocks of image data, each having a data volume corresponding to the characteristics of the image process to be performed, can be obtained sequentially from the upper left corner. Further, for a case in which the access characteristics of the inputted image data is a line position format and the characteristic of the image process are such that an 8 X 8 block of pixels is to be subjected thereto, the data volume of each of the small blocks of image data is eight lines. Still further, for a case in which the access characteristics of the inputted image data is an 8 X 8 pixel block unit and the characteristics of the image process are such that 4 lines are to be subjected thereto, the data volume of each of the small blocks of image data is 8 lines. Note that for cases in which the processing apparatus has ample processing capacity, the data volume of each of the small image data blocks can be larger than that described above.

Further, according to the image processing method of the present invention, it is preferable that the inputted image data is cached, and
that said cached inputted imaged data is divided into the small blocks of image data.

Still further, according to the image processing method of the present invention, it is preferable that the processed small blocks of image data are sequentially cached, and
that the output data is outputted from said cached small blocks of processed image data, according to the characteristics of the output destination.

The phrase "the characteristics of the output destination" refers to the quantity of data capable of being processed at one time, the file formats handled by the output destination (DIB format, RAW format), the number of channels per pixel (three channels for RGB, four channels for RGB plus an α channel that represents transparency, etc.), whether or not there is blank space corresponding to the format of the image data (for a case in which an image data of a file format in which the number of pixels definitely becomes a multiple of four, and only the number of image portions doesn't become a multiple of four, blank space is provided so that the entire number of pixels becomes a multiple of four), etc.

Further, according to the image processing method of the present invention, it is preferable that the image processes are performed in accordance with the characteristics of the inputted image data and/or the characteristics of the output destination.

The referents of "characteristics of the inputted image data" include the format of the image data (DIB format, RAW format), the number of channels per pixel, whether or not the image data contains blank space in accordance with the format thereof, etc.

The phrase "image processes are performed in accordance with the characteristics of the inputted image data" refers to the subjection of an inputted image data having any type of characteristics, regardless of said characteristics, to a uniform image processing. In the case of the readout starting point, for example, because the readout starting point of the image data differs between the upper left and lower left corners of the image data depending on the format thereof, the image process is performed sequentially from the readout starting point of the small blocks of image data. Further, the order in which the data of each pixel is obtained changes depending upon the number of channels per pixel. In the case, for example, in which each pixel has three channels, RGB, the data of each pixel is obtained in the order RGBRGB...; however, in the case in which each pixel has four channels, RGBα, the data is obtained in the order RGBαRGBα... . Here, because only the RGB channels are utilized in the image process, it is not necessary to perform the image process on the α channel. Accordingly, for a case in which the inputted image data is four-channel RGBα image data, the image process is performed so that the α channel is skipped. Also, for cases in which the image data contains blank space, because said blank space is not subjected to the image process, the image process is performed so that the blank space is skipped.

The phrase "the image processes are performed in accordance with the characteristics of the output destination" refers to the subjection of the inputted image to data to image processes so that the output destination receives small blocks of processed image data which are capable of being processed at said output destination. In a case, for example, in which the standard output position differs between the upper left and lower left corner of the image data dependent on the output destination, the image process is performed taking the standard position as the starting position. Further, there are cases wherein the number of channels per pixel changes according to the output destination. For example, there are cases wherein the image process is performed utilizing three channels, RGB, and the output destination requires four-channel RGBα data. Accordingly, in this case, a process for adding an α channel is performed. Also, there are cases wherein the format handled by the output destination requires data having a number of pixels that is a multiple of 4. Accordingly, in this case, a process for adding blank space to the borders of the image represented by a processed image data, so as to increase the number of pixels of said image data so that it becomes a multiple of 4, is performed.

Further, according to the image processing method of the present invention, it is preferable that a determination is made as to whether or not the image process dependent on the output destination is valid or not, based on the characteristics of the input destination of the inputted image data and the output characteristics of the output destination, and
for cases in which it is determined that the image process dependent on the output destination is valid, the processing dependent on the output destination be substituted for the aforementioned processing.

The referents of "the characteristics of the input destination of the inputted image data" include the make of the device that has formed the image data, the type of device, the resolution, the number of valid pixels, the color space, etc.

The referents of "the output characteristics of the output destination" include the make of the device that is to output the processed image data, the type of device, the resolution, the number of valid pixels, the color space, the image processing capacity, the characteristics of the image process, etc.

The phrase "the image process dependent on the output destination" refers to the image process performed by the driver of a printer or other output device. Here, for cases in which the characteristics of the device that forms the inputted image data and the output characteristics of the output device match, there are many cases for which a higher quality image is obtained if the image process dependent on the output device is carried out. Accordingly, the phrase "the image process dependent on the output destination is valid" refers to the fact that small blocks of processed image data capable of forming a higher quality image can be obtained by carrying out the image process dependent on the output destination than if said process were to be performed by the device that formed the inputted image data. Therefore, processed image data capable of forming an even higher quality image can be obtained in this way.

The image processing apparatus according to the present invention is an apparatus for subjecting inputted image data to image processes and output processed image data, and comprises:
an input means for sequentially dividing the inputted image data into small blocks of image data according to the characteristics of the image processes to be performed,
a processing means for sequentially subjecting said small blocks of image data to an image process(es) to sequentially obtaining small blocks of processed image data, and
an output means for sequentially outputting said small blocks of processed image data to an output destination.

Note that according to the image processing apparatus of the present invention, it is preferable that the input means is a means that also divides the inputted image data into small blocks of image data according to the access characteristics of the image data.

Further, according to the image processing apparatus of the present invention, it is preferable that a caching means for caching the inputted image data is further provided, and
that the input means is a means for dividing the cached inputted image data into small blocks of image data.

Still further, according to the image processing apparatus of the present invention, it is preferable that an output caching means for sequentially caching the small blocks of processed image data is further provided, and
that the output means is a means for outputting output data from said cached small blocks of processed image data according to the characteristics of the output destination.

In addition, according to the image processing apparatus of the present invention, it is preferable that the image processing means is a means for performing image processes based on the characteristics of the inputted image data and/or the characteristics of the output destination.

Additionally, according to the image processing apparatus of the present invention, it is preferable that a determination be made as to whether the image process dependent on the output destination of the inputted image data is valid, based on the characteristics of the input destination and the output characteristics of the output destination, and
that for cases in which it has been determined that the image process(es) dependent on the output destination is valid, the processing dependent on the output destination be substituted for the aforementioned processing.

Note that the image processing method according to the present invention can be provided as a program that is capable of causing a computer to execute said image processing method and which has been stored on a computer readable medium.

According to the present invention, inputted image data is sequentially divided into small blocks of image data in accordance with the characteristics of the image process (es) to be performed thereon, and the small blocks of image data are subjected to image process(es) to obtain small blocks of processed image data, which are then outputted. Therefore, even if an apparatus for implementing the present invention (e.g., a PC) has a small memory capacity, in comparison to the conventional practice wherein an entire image is subjected to an image process at one time, image processing whereby it is possible to obtain a high quality processed image can be performed at high speed. Further, because the small blocks of image data are sequentially obtained, processed, and outputted, the formation of a large number of temporary files can be prevented, and a decrease in the performance level of an apparatus implementing the present invention can be prevented. Also, conventionally, for cases in which it is necessary to convert image data to the standard format for performing image processing, a large quantity of memory is consumed in conjunction with the performance of said conversion, and time to perform the conversion process is required; however, according to the present invention, because the image process(es) are performed on small blocks of image data, even for cases in which it is necessary to convert the image data to a different format, a large quantity of memory is not consumed. In addition, if the image data is divided into small blocks of image data, even for cases in which it is necessary to convert the image data, because the conversion process and the image process(es) can be performed one after the other, in comparison to the case in which the entirety of the image data is converted and then processed, the processing time can be reduced.

### BRIEF DESCRIPTION OF THE DRAWINGS

Figure 1 is a block diagram of the configuration of an image output system implementing the image processing apparatus according to the first embodiment of the present invention,
Figure 2 is a flow chart showing the operation of the first embodiment,
Figure 3 is a block diagram of the configuration of an image output system implementing the image processing apparatus according to the second embodiment of the present invention,
Figure 4 is a block diagram of the configuration of an image output system implementing the image processing apparatus according to the third embodiment of the present invention,
Figure 5 is a block diagram of the configuration of an image output system implementing the image processing apparatus according to the fourth embodiment of the present invention,
Figure 6 is a block diagram of the configuration of an image output system implementing the image processing apparatus according to the fifth embodiment of the present invention,
Figure 7 is a flow chart showing the operation of the sixth embodiment, and
Figure 8 is a block diagram of the configuration of a conventional image output system.

### DESCRIPTION OF THE PREFERRED EMBODIMENTS

Hereinafter the preferred embodiments of the present invention will be explained with reference to the attached drawings.

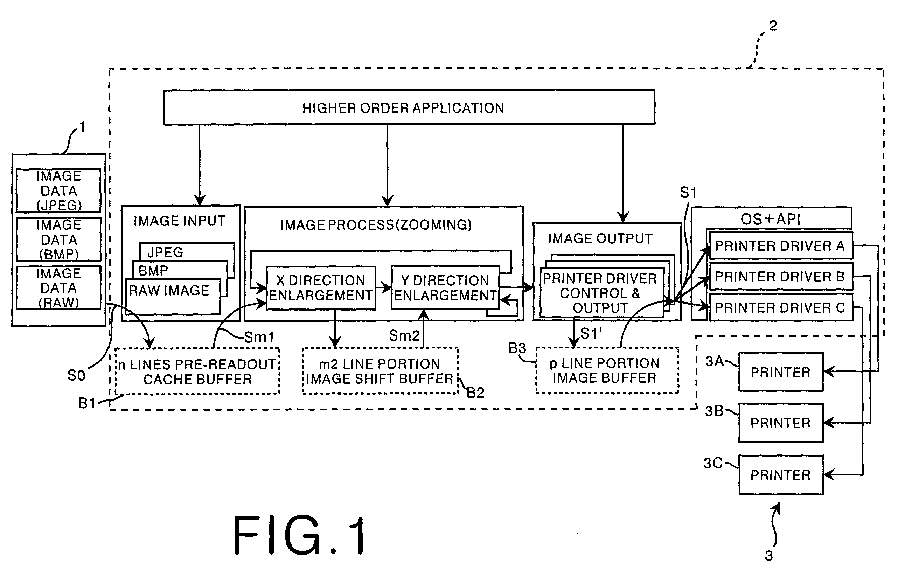

Fig. 1 is a block diagram of the configuration of an image output system implementing the image processing apparatus according to the first embodiment of the present invention. As shown in Fig. 1, the image processing apparatus according to the first embodiment is a system for subjecting an image data S0 stored on a medium 1 such as a memory card, a floppy disc, a CD-ROM or the like to image processes, and comprises a PC 2 for subjecting the image data S0 to image processes to obtain processed image data S1, and a printer 3 for printing out the processed image data S1.

The PC 2 comprises a CPU, a hard disk, a RAM memory, an input means such as a keyboard, a mouse or the like, a readout apparatus for reading out the image data S0 from the media, and a printer as well as an interface therefor; wherein an application software for causing the PC to execute the image processes and a printer driver have been installed therein. Note that the application software for causing the image processes to be executed is formed of an application for performing an image input process, an application for performing image processes, an application for performing an image output process, and a higher order application for operating these applications. Further, there are three printers 3A-3C connected to the PC 2, and three printer drivers A-C corresponding to these printers, respectively, installed in the PC2.

Further, according to the first embodiment, a magnification process is performed as the image process. This magnification process consists of: setting coordinates x, y on the image represented by the image data S0; performing the magnification process for the X direction first; and then performing the magnification process for the Y direction. Note that the processing performed for the magnification process occurring in the X direction is performed concurrently for a number of lines, such as m1, for example, and the processing performed for the magnification process occurring in the Y direction is performed utilizing the data of a number of lines, such as m2, for example.

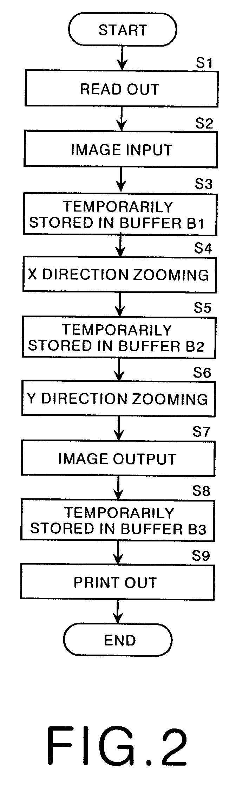

Next, the operation of the first embodiment will be explained. Fig. 2 is a flowchart showing the operation of the first embodiment. First, the image data S0 stored on the media 1 is readout at the readout apparatus (step S1). Here, because the access characteristics of the image data S0 can differ depending on the format thereof, e.g., JPEG format, bitmap format, RAW format or the like, an image input process corresponding to the access characteristics of the image data S0 is performed (step S2). Here, according to the format of the image data S0, the data unit (i.e., whether or not the image data S0 has been formed in a line position format, a block position format, etc.), the compression state (compressed/non-compressed), the readout starting point (the lower left corner for the DIB format, the upper left corner for the RAW format), etc., of the image data S0 differ. The access characteristics of the image data S0 represent the data unit, the compression state (compressed/non-compressed), and the readout starting point of the image data S0 corresponding to the format thereof.

Here, for cases wherein the readout starting point of the image data is the upper left corner, the image input process is performed so that the image data is readout from the upper left corner. Further, for cases wherein the access characteristic of the image data is a line unit format, an image input process is performed so that image data is obtained in line units. Still further, for cases wherein the access characteristic of the image data is an 8 X 8 pixel block format, an image input process is performed so that image data is obtained in 8 X 8 pixel blocks. Also, if the image data S0 is in the JPEG format, an image input process is performed so that the image data S0 is decompressed.

Accordingly, process modules corresponding to the access characteristics of the image data S0 has been prepared for use in the image input process. More specifically, a process module corresponding to the access characteristic of image data in the JPEG format, a process module corresponding to the access characteristic of image data in the bitmap format, and a process module corresponding to the access characteristic of image data in the RAW format are provided; wherein the image input process is performed by selecting the process module corresponding to the access characteristic of the image data S0 to be inputted by use of a higher order application.

According to the current embodiment, the access characteristic of the image data S0 is a single line unit format, and the image input process for the image data S0 is performed for each line extending in the direction X. In this way, the data of a number of lines n (n > m1) is temporarily stored in a pre-readout cache buffer B1 (step S3). At this time, the image data S0 to be inputted is sequentially stored in the pre-readout cache buffer B1, according to the access characteristics of said image data S0. For example, because the readout starting point of image data in the RAW format is the lower left corner, the image data is read out from the lower left corner and stored in the pre-readout cache buffer B1.

Continuing, according to the image process: an image data Sm1 (small blocks of image data) having a portion of m1 lines required for the magnification process to be performed in the direction X is read out from the pre-readout cache buffer B1; this image data Sm1 is then subjected to the magnification process in the direction X (step S4); and the processed image data Sm1 is temporarily stored in an image shift buffer B2 (step S5). Upon the storage in the image shift buffer B2 of the number of lines m2 of image data required for the performance of the magnification process in the direction Y, the image data Sm2 composed of a number of lines m2 is read out and subjected to the magnification process in the direction Y (step S6).

Note that according to the image process, the processing is performed corresponding to the format of the image data S0 the number of channels per pixel, and whether or not the image data S0 includes blank space. For example, with regard to the readout starting point, because the readout starting point of the image data S0 differs between the upper left corner and the lower left corner depending on the format of said image data S0, the image process is performed from the starting position at which the data stored in the pre-readout cache buffer B1 is read out. Further, the order in which the data of each pixel is obtained changes due to the number of channels per pixel. For example, for cases in which the image data is three-channel RGB image data, the data of each pixel is obtained n the order RGBRGB..., for cases in which the image data is four-channel RGBα image data, the data of each pixel is obtained in the order RGBαRGBα... . Here, because only the RGB channels are utilized for the performance of the image process, it is not necessary to subject the α channel to the image process. Accordingly, for cases in which the image data S0 is four-channel RGBα image data, the image process is performed so as to skip the α channel. Also, for cases in which blank space is included within the image data, because said blank space is not subjected to the image process, the image process can be performed on the data in a manner so as to skip the blank space.

Note that according to the image process, the processing can be performed in accordance with the characteristics of the printer 3. For example, with regard to the standard position of the image to be outputted, because said standard position differs between the upper left corner and the lower left corner according to the type of the printer 3, the standard position can be taken as the starting position of the image process. Further, there are cases in which the number of channels per pixel differs according to type of the printer 3. For example, although the image process is performed using only the three channels RGB, there are cases for which certain types of the printer 3 require four-channel RGBα data. Accordingly, in this case, a process for adding the α channel data can be performed. Also, for a case in which the format of the data handled by the printer 3 requires the number of pixels to be a multiple of four, the pixels of the image to be outputted must be made into a multiple of four. Accordingly, in this case, a process for adding blank pace to the border of the image represented by the processed image data S1 can be performed to make the number of pixels of the processed image data S1 a multiple of four.

An image output process is performed to output the processed image data one line at a time (step S7). This image output process is a process wherein the standard API of the OS and the printer driver corresponding to any of the printers A-C are used to perform a magnification process so as to convert the processed image data S1 to a format conforming to the printer to be employed. Therefore, according to the image output process, there is a module for processing using the printer A, a module for processing using the printer B, and a module for processing using the printer C, and the higher order application selects the processing module corresponding to the printer to which the processed image data S1 is to be outputted. The image output process processed image data S1' is temporarily stored in an image buffer B3 (step S8).

Then, once the number of lines of the image data S1' corresponding to the printer to which said data is output is stored in the image buffer B3, the standard API of the OS and the printer driver input the processed image data S1 in line units p (the number of line position capable of being processed by the printer 3) to the printer, and carries out the printing out thereof (step S9), whereby the processing is completed.

Note that according to the current embodiment, it is possible to perform the image input process, the image process and the image output process sequentially.

In this way, according to the first embodiment, because the image data S0 is sequentially divided into small blocks of image data and processed, that is to say, is not processed as a single unit in its entirety, even if the memory capacity of the PC 2 is small, in comparison to the conventional method of processing the entirety of the image data by the image process at one time, it is possible to rapidly perform image processing capable of obtaining a high image quality processed image. Further, because the small blocks of image data Sm1 and Sm2 are obtained sequentially, processed, and outputted accordingly, the formation of a large number of temporary files and deterioration to the performance of the PC 2 can be prevented. Also, conventionally, for cases in which it is necessary to convert the image data to the standard format for performing image processes, large amounts of memory are consumed during the conversion, and processing time for performing the conversion has is also required; however, according to the current embodiment, because the image processes are performed on the small blocks of image data Sm1 and Sm2, even for cases in which it is necessary to convert the image data, a large amount of memory is not consumed. In addition, even for cases in which it is necessary to convert the image data S0, because the conversion process and the image processes can be performed one after the other, in comparison to cases in which the entirety of the image data is converted and then the image processes are performed, the processing time can be shortened.

Next, the second embodiment of the present invention will be explained.

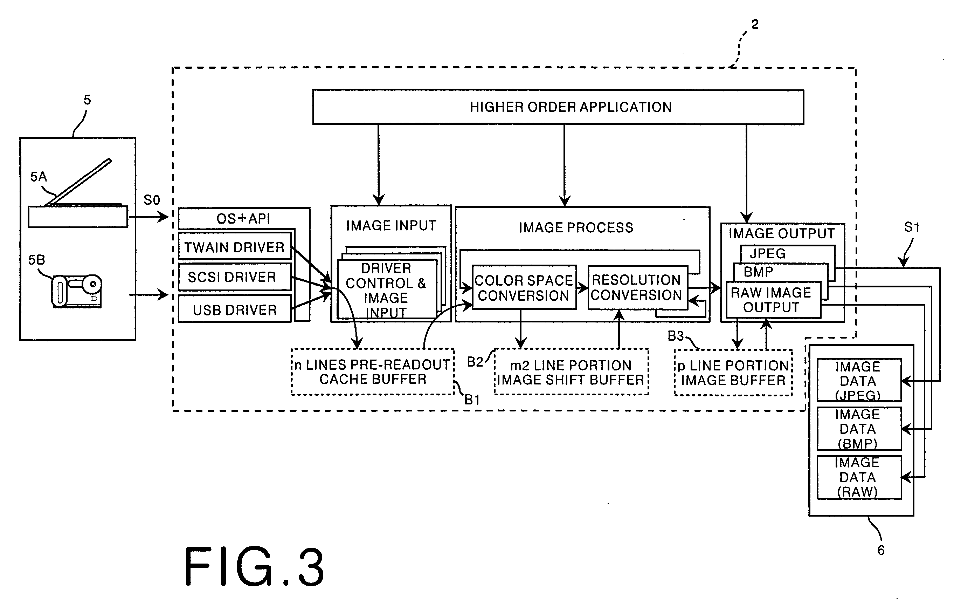

Fig. 3 is a block diagram of the configuration of an image output system implementing the image processing apparatus according to the second embodiment of the present invention. As shown in Fig. 3, the image outputting system according to the second embodiment differs from that of the first embodiment in accordance with the following points: the image outputting system according to the second embodiment is a system for subjecting an image data S0 obtained by use of a scanner 5a, a digital camera 5b or other input device 5 to image processes, and stores the processed image data S1 as an image file on a media 6. Note that according to the second embodiment, a color space conversion process and a resolution conversion process are performed as the image processes.

According to the second embodiment, the image input process of inputting the image data S0 to the PC2 is performed by the standard API of the OS of the PC2 and the driver of the input device 5. Note that a TWAIN driver, a SCSI driver, or a USB driver is selected as the driver, corresponding to the input device. The image input process of inputting the inputted image data S0 according to the second embodiment is performed in the same manner as occurred in the first embodiment, the color space conversion process, the resolution conversion process, and the image output process are performed, after which the processed image data is stored on the media 6. Note that it is not required that the image data S0 be inputted to the PC 2 via the driver; the image data S0 can be inputted directly to the PC2.

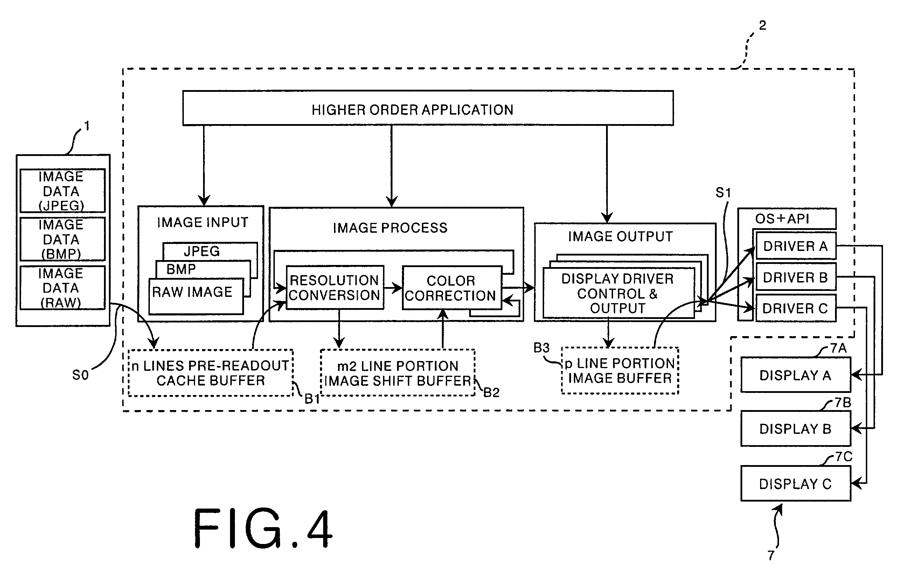

Next, the third embodiment of the present invention will be explained. Fig. 4 is a block diagram of the configuration of an image output system implementing the image processing apparatus according to the third embodiment of the present invention. As shown in Fig. 4, the image outputting system according to the third embodiment differs from that of the first embodiment in accordance with the following points: the image outputting system according to the third embodiment is a system for subjecting an image data S0 stored on a media 1 to image processes and displaying the image represented by the processed image data S1 on a display 7. Note that according to the third embodiment, a resolution conversion process and a color correction process are performed as the image processes. The PC2 is connected to three displays, 7a-7c, and has installed therein a driver for each of the displays 7a-7c.

The image input process of inputting the inputted image data S0 according to the third embodiment is performed in the same manner as occurred in the first embodiment, and the resolution conversion process, the color correction process and the image output process are performed. Further, the image represented by the processed image data S1 is displayed by the inputting of the processed image data S1 by line units p by the standard API of the OS of the PC2 and the driver of the display 7 into any of the displays 7a-7c.

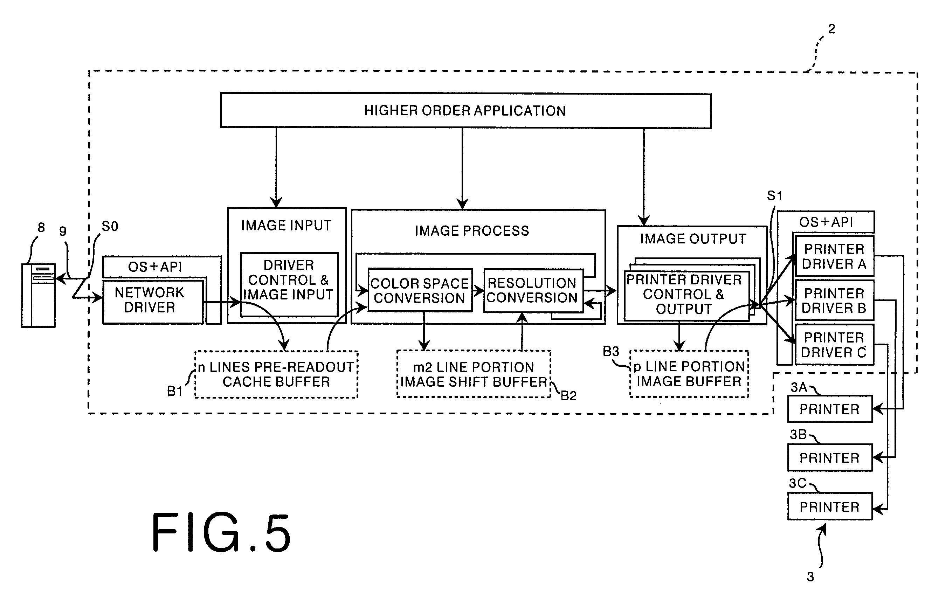

Next, the fourth embodiment of the present invention will be explained. Fig. 5 is a block diagram of the configuration of an image output system implementing the image processing apparatus according to the fourth embodiment of the present invention. As shown in Fig. 5, the image outputting system according to the fourth embodiment differs from that of the first embodiment in accordance with the following points: the image outputting system according to the fourth embodiment is a system for subjecting an image data S0 obtained from a server 8 via the PC2 and a network 9 to image processes and printing out the processed image data S1 on the printer 3. Note that according to the fourth embodiment, a color space conversion process and a resolution conversion process are performed as the image processes. Further, the PC2 is connected to three printers 3a-3c in the same manner as in the first embodiment.

According to the fourth embodiment, the image data S0 is inputted to the PC2 by the standard API of the OS and the network driver. The inputted image data S0 is subjected to an image input process, however, at this time, the image input process is performed according to the load on the network 9, the packet size, or the like. Continuing, a color space conversion process and a resolution conversion process are performed, an image output process is performed in the same manner as occurred in the first embodiment, and the p line unit image data is outputted to any of the printers 3a-3c by the API of the OS and the network driver, whereby the processed image data S1 is printed out.

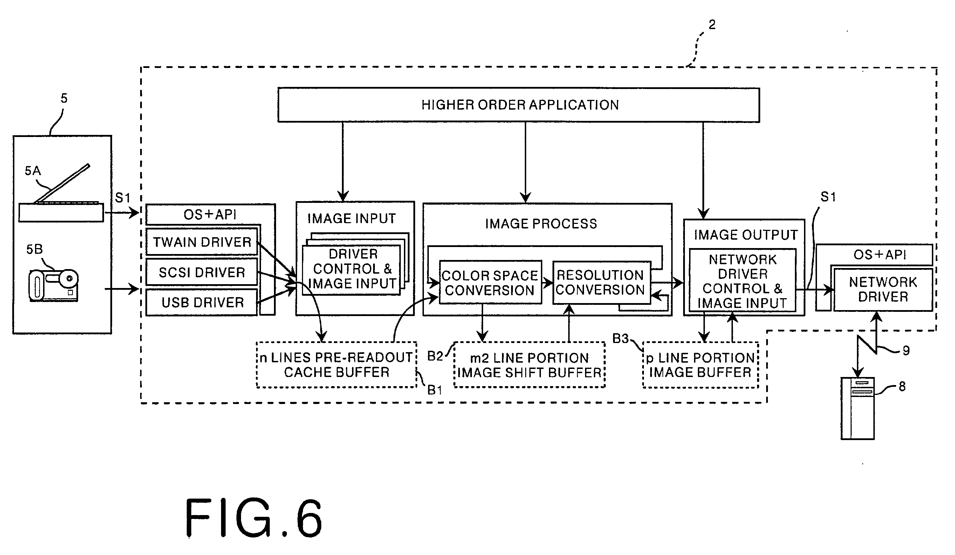

Next, the fifth embodiment of the present invention will be explained. Fig. 6 is a block diagram of the configuration of an image output system implementing the image processing apparatus according to the fifth embodiment of the present invention. As shown in Fig. 6, the image outputting system according to the fifth embodiment differs from that of the first embodiment in accordance with the following points: the image outputting system according to the fourth embodiment is a system for subjecting an image data S0 obtained from a scanner 5a, digital camera 5b or other input device 5 to image processes, and outputting the processed image data S1 obtained thereby to a server 8 via the network 9. Note that according to the fifth embodiment, a color space conversion process and a resolution conversion process are performed as the image processes.

According to the fifth embodiment, the image data S0 is inputted to the PC2 by the standard API of the OS and the driver of the input device 5 (a TWAIN driver, an SCSI driver, a USB driver). The inputted image data S0 is subjected to the image input processes in the same manner as occurs in the first embodiment. Continuing, a color space conversion process and a resolution conversion process are performed, and an image output process is performed. Then, the processed image data S1 is outputted by the API of the OS and the network driver to the server 8 via the network 9.

Note that although according to the first through the fifth embodiments, a media 1, an input device 5 and a server 8 have been employed as the input sources, and a printer 3, a media 6, a display 7, and a server 8 have been employed as the output destinations, the present invention is not limited thereto; the present invention can be applied so long as image data formed in a desired image forming device or stored image data S0 is subjected to an image process, and the processed image data obtained thereby is outputted to an output device. Further, the combinations of input and output devices are not limited to those occurring in the embodiments described above.

Further, although according to the first through the fifth embodiments, the image data S0 and the outputted image data have been temporarily stored in a pre-readout cache buffer B1 and an image buffer B3, respectively, the present invention is not limited thereto; it is possible that the provision of the buffers B1 and B3 be foregone and the image processes performed. In this case, the image data S0 that has been subjected to the image input process is sequentially subjected to image processes, and sequentially subjected to the image output process and outputted.

Still further, according to the embodiments described above, although the image data S0 has been subjected to the image processes by the OS installed in the PC2, a determination can be made as to whether the image process dependent on the output destination of the inputted image data is valid, based on the characteristics of the input source (the maker of the device that has formed the image data to be inputted, the type of the device, the resolution, the valid number of pixels, the color space, etc.) and the output characteristics of the output destination (the maker of the device that is to output the processed image data, the type of the device, the resolution, the valid number of pixels, the color space, the processing capacity, the characteristics of the image processes, etc.), and for cases in which it has been determined that the image process dependent on the output destination is valid, the processing dependent on the output destination ca be performed. Hereinafter, this will be explained as the sixth embodiment. Note that according to the sixth embodiment, in the same manner as occurred in the first embodiment, the image data S0 has been stored on a media 1, and the output destination of the processed image data S1 is a printer 3. Accordingly, the image processing system according to the sixth embodiment has the same configuration as that of the first embodiment.

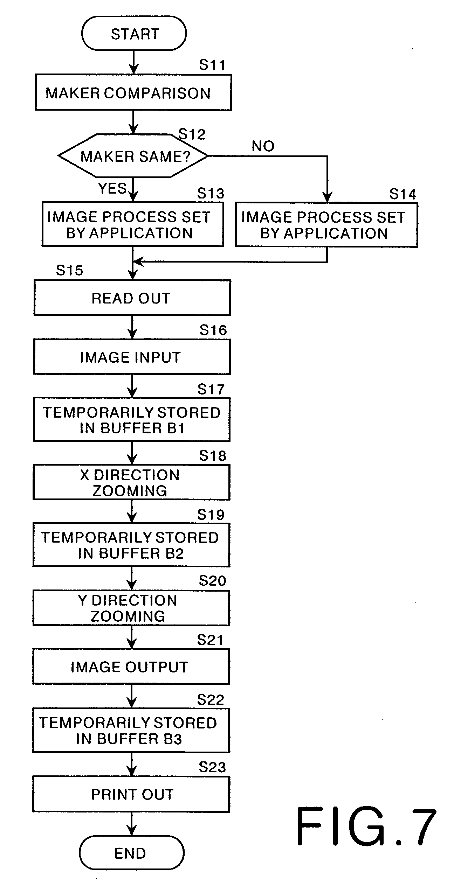

Next, the operation of the sixth embodiment will be explained. Fig. 7 is a flowchart showing the operation of the sixth embodiment. Note that according to the sixth embodiment, the maker of the input device that has formed the image data S0 is already known, and determination is made as to whether the image processes are to be performed by an application installed in the PC 2, or by one of the printer drivers a-c, based upon the maker of the input device and which printer among the three printers a-c is to print out the processed image data.

First, the application installed in the PC2 conducts a comparison of the maker of the device that has formed the image data S0 that is to be inputted and the maker of the printer that is to print out the processed image data (step S11). Then, a determination is made as to whether the maker is the same or not (step S12); if it is determined that the maker is the same, the PC 2 is set so that the image process is performed by the printer driver (step S13). On the other hand, if it is determined that the maker is not the same, the PC 2 is set so that the image process is performed by the application (step S14).

Then, in steps 15-23, the same image input process, image process, and image output process occurring in the steps 1-9 of the first embodiment are performed, and the processing is complete. Note that for cases in which an affirmative result has been obtained in step S12, the processes occurring in steps 18 and 20 are performed by the printer driver; for cases in which a negative result has been obtained in step S12, the processes occurring in steps 18 and 20 are performed by the application.

Here, for cases in which the characteristics of the input device that has formed the image data (here, the maker) and the output characteristics of the output destination match, there are many cases for which an image of higher image quality will be obtained by performing the image process dependent on the output destination (the image process performed by the printer driver). Accordingly, by performing the image processes by the printer driver for cases in which a positive has been obtained in step S12, it becomes possible to obtain small blocks of processed image data capable of forming an image of a higher image quality.

Note that according to each of the embodiments described above, an application has been installed in the PC 2 and each of the image input process, the image processes, and the image output process have been performed by said installed application; however, hardware for performing the image input process, the image processes, and the image output process (i.e., an image input means, an image processing means, and an image output means) can be provided and the image input process, the image processes, and the image output process occurring in each procedure can be performed thereby.

## Claims

1. A method of processing images, wherein
inputted image data is subjected to image processes and the processed image data is outputted, comprising the steps of
sequentially dividing inputted image data into small blocks of image data, each having a data volume according to the characteristics of an image process to be performed,
sequentially performing an image process on said small blocks of image data to sequentially obtain small blocks of processed image data,
and sequentially outputting said small blocks of processed image data to an output destination.

2. A method of processing images as defined in claim 1, wherein
said inputted image data is divided into said small blocks of data in accordance with the access characteristics of said inputted image data.

3. A method of processing images as defined in claim 1, wherein
said inputted image data is cached, and
said cached inputted imaged data is divided into the small blocks of image data.

4. A method of processing images as defined in claim 1, wherein
said processed small blocks of image data are sequentially cached, and
output data is outputted from said cached small blocks of processed image data, according to the characteristics of the output destination.

5. A method of processing images as defined in claims 1, wherein
the image processes are performed in accordance with the characteristics of the inputted image data and/or the characteristics of the output destination.

6. A method of processing images as defined in claim 1, wherein
a determination is made as to whether or not the image process dependent on the output destination is valid or not, based on the characteristics of the input destination of the inputted image data and the output characteristics of the output destination, and
for cases in which it is determined that the image process dependent on the output destination is valid, the processing dependent on said output destination is substituted for the aforementioned processing.

7. An image processing apparatus for subjecting inputted image data to image processes and output processed image data, and which comprises
an input means for sequentially dividing inputted image data into small blocks of image data according to the characteristics of the image processes to be performed,
a processing means for sequentially subjecting said small blocks of image data to an image process to sequentially obtain small blocks of processed image data, and
an output means for sequentially outputting said small blocks of processed image data to an output destination.

8. An image processing apparatus as defined in claim 7, wherein
the input means is a means for dividing the inputted image data into small blocks in accordance with the access characteristics of said inputted image data, also.

9. An image processing apparatus as defined in claim 7, further comprising
an input caching means for caching the inputted image data, wherein
the input means is a means for dividing the cached inputted image data into small blocks of image data.

10. An image processing apparatus as defined in claim 7, further comprising
an output caching means for sequentially caching the small blocks of processed image data, wherein
the output means is a means for outputting output data from said cached small blocks of processed image data according to the characteristics of the output destination.

11. An image processing apparatus as defined in claim 7, wherein
the image processing means is a means for performing image processes based on the characteristics of the inputted image data and/or the characteristics of the output destination.

12. An image processing apparatus as defined in claim 7, further comprising
a control means for determining whether the image process dependent on the output destination of the inputted image data is valid, based on the characteristics of the input destination of the inputted image data and the output characteristics of the output destination, and
controlling, for cases in which it has been determined that the image process dependent on the output destination is valid, the image processing means so that the processing dependent on the output destination is performed instead of the aforementioned processing.

13. A computer readable storage medium capable of recording a program that causes a computer to execute the image processing method wherein inputted image data is subjected to an image process and the thus processed image data is outputted, comprising
a procedure for sequentially dividing inputted image data into small blocks of image data, each having a data volume according to the characteristics of an image process to be performed,
a procedure for sequentially performing an image process on said small blocks of image data to sequentially obtain small blocks of processed image data,
and a procedure for sequentially outputting said small blocks of processed image data to an output destination.

14. A computer readable storage medium as defined in claim 13, wherein
the procedure for dividing the inputted image data into the small blocks of data is a procedure for procedure for dividing the inputted image data into the small blocks of data in accordance with the access characteristics of said inputted image data.

15. A computer readable storage medium as defined in claim 13, further comprising
an input caching procedure for caching the inputted image data, wherein
the procedure for dividing the inputted image data into the small blocks of data is a procedure for dividing the cached inputted image data into the small blocks of image data.

16. A computer readable storage medium as defined in claim 13, further comprising
an output caching procedure for sequentially caching the small blocks of processed image data, wherein
the procedure for outputting the small blocks of processed image data is a procedure for outputting output data from said cached small blocks of processed image data according to the characteristics of the output destination.

17. A computer readable storage medium as defined in claim 13, wherein
the procedure for obtaining the small blocks of processed image data is a procedure for performing image processes based on the characteristics of the inputted image data and/or the characteristics of the output destination.

18. A computer readable storage medium as defined in claim 13, further comprising
a control procedure for determining whether the image process dependent on the output destination of the inputted image data is valid, based on the characteristics of the input destination of the inputted image data and the output characteristics of the output destination, and
a procedure for performing, for cases in which it has been determined that the image process dependent on the output destination is valid, the image processing procedure so that the processing dependent on the output destination is performed instead of the aforementioned processing.
